# EUROPÄISCHE PATENTSCHRIFT

(11) **EP 2 901 529 B1**
(45) Veröffentlichungstag und Bekanntmachung des Hinweises auf die Patenterteilung: **21.08.2019**
(21) Anmeldenummer: 13776982.4
(22) Anmeldetag: 24.09.2013
(51) Int. Cl.: H01S 3/00, G01J 11/00, H01S 3/23

(54) **VERFAHREN ZUM BESTIMMEN DER RELATIVEN ZEITLAGE ELEKTROMAGNETISCHER PULSE UND BESTIMMUNGSVORRICHTUNG**
METHOD FOR DETERMINING THE RELATIVE TEMPORAL POSITION OF ELECTROMAGNETIC PULSES AND DETERMINATION DEVICE
PROCÉDÉ ET DISPOSITIF DE DÉTERMINATION DE LA POSITION TEMPORELLE RELATIVE D'IMPULSIONS ÉLECTROMAGNÉTIQUES

(30) Priorität: 27.09.2012 DE 102012217655
(43) Veröffentlichungstag der Anmeldung: 05.08.2015
(73) Patentinhaber: Fraunhofer-Gesellschaft zur Förderung der angewandten Forschung e.V., 80686 München (DE)
(72) Erfinder: SARTORIUS, Bernd, 14052 Berlin (DE); DIETZ, Roman, 10437 Berlin (DE); ROEHLE, Helmut, 13629 Berlin (DE)
(74) Vertreter: Maikowski & Ninnemann Patentanwälte Partnerschaft mbB
(86) Internationale Anmeldenummer: PCT/EP2013/069832
(87) Internationale Veröffentlichungsnummer: WO 2014/048912

(56) Entgegenhaltungen:
- EP-A2- 0 790 492
- EP-A2- 1 128 593
- US-A1- 2004 051 933

## Beschreibung

Die Erfindung betrifft ein Verfahren zum Bestimmen der relativen Zeitlage elektromagnetischer Pulse gemäß Anspruch 1 sowie eine Bestimmungsvorrichtung zum Durchführen eines derartigen Verfahrens gemäß Anspruch 14.

Aus dem Stand der Technik ist bekannt, die relative Zeitlage (Phase) zweier elektromagnetischer Pulse (oder zweier Pulszüge) zu bestimmen, um die Zeitlage der Pulse (z.B. zweier Lichtpulse) einstellen oder regeln zu können. Beispielsweise werden Messungen unter Variation der relativen Zeitlage der Pulse durchgeführt werden, z.B. bei "Pump and Probe"-Messungen. Hier regt ein erster Pulse ("Pump"-Puls) einen Effekt an (d.h. er ruft einen elektromagnetischen Puls hervor) und ein zweiter, variabel verzögerter Puls ("Probe"-Puls) tastet das Zeitverhalten des durch den ersten Puls hervorgerufenen elektromagnetischen Pulses (d.h. des Effektes) ab.

Beispielsweise arbeiten auch Terahertz-Puls-Systeme nach dem Pump-Probe-Prinzip: Ein erster Puls regt eine photoleitende Sende-Antenne zur Emission von Terahertz-Strahlung an und ein zweiter Puls tastet mit variabler Verzögerung das von einer zweiten photoleitenden Detektor-Antenne empfangene Signal ab. Bei anderen Pump-Probe-Messungen wird von einer Pulsquelle ausgegangen (z.B. einem Puls-Laser), dessen gepulste Strahlung in zwei Pfade aufgeteilt wird, wobei in einem der beiden Pfade eine (z.B. mechanische) Verzögerungsstrecke angeordnet wird. Andere Systeme verwenden statt einer (relativ langsamen) Verzögerungsmechanik eine Anordnung zur Variation der Repetitionsfrequenz der Pulsquelle: Erzeugt eine erste Pulsquelle mit einer Repetitionsfrequenz f1 die Pump-Pulse und eine zweite Pulsquelle mit einer Repetitionsfrequenz f2 die Probe-Pulse, so bleibt die relative Zeitlage der Pulse konstant, wenn die Repetitionsfrequenzen f1 und f2 gleich sind. Wenn eine der Frequenzen kleiner wird, dann überholen die entsprechenden Pulse die anderen Pulse; wird die Frequenz größer, so fallen die Pulse wieder zurück. Dieses Verfahren setzt jedoch eine Synchronisierung der beiden von den beiden Pulsquellen erzeugten Pulsfolgen voraus.

Eine Möglichkeit, die beiden Pulsfolgen zu synchronisieren, besteht in der direkten Detektion der Pulse mit Detektoren, die die Pulse zwar zeitlich nicht auflösen, jedoch der Repetitionsrate folgen können. Mit nachgeschalteten elektronischen Mikrowellenkomponenten und -techniken werden dann Phasen- und/oder Frequenzabweichungen detektiert und Regelsignale erzeugt (J. Posthumus, "Terahertz with Electronic Delay", Optik-Photonik, Wiley, 2007, pp.29-31).

Bekannt ist zudem, die Pulsfolgen in einen nichtlinearen Kristall als "Zeitkorrelator" einzustrahlen, wobei die Summenfrequenz (bzw. die doppelte Frequenz) der elektromagnetischen Lichtwelle nur dann entsteht, wenn die Pulsfolgen gleichzeitig und synchron den nichtlinearen Kristall durchlaufen. Die Leistung der im nichtlinearen Kristall erzeugten Strahlung zeigt daher die Zeitkorrelation der beiden Pulsfolgen an (J. Kim et al., Optics Letters, Vol. 32, 9, pp. 1044-1046, 2007).

Darüber hinaus offenbart auch die EP 0 790 492 A2 ein Bestimmen der relativen Zeitlage von Pulsen unter Verwendung nichtlinearer Materialien wie z.B. einem sättigbaren Absorber. EP 1 128 593 A2 offenbart die Verwendung von einem sättigbaren Absorber zur Wiederherstellung des zeitlichen Abstands von Lichtsignalen und US 2004/0051933 A1 offenbart sättigbare Absorber zum optischen Schalten mit charakteristischen Schaltzeiten im Femtosekundenbereich.

Das von der Erfindung zu lösende Problem besteht darin, ein möglichst kostengünstiges und möglichst einfaches Verfahren zum Synchronisieren von elektromagnetischen Pulsen anzugeben. Des Weiteren soll eine entsprechende Vorrichtung geschaffen werden.

Diese Probleme werden durch die Schaffung des Verfahrens mit den Merkmalen des Anspruchs 1 sowie der Vorrichtung mit den Merkmalen des Anspruchs 14 gelöst. Weiterbildungen der Erfindung sind in den abhängigen Ansprüchen angegeben.

Danach wird ein Verfahren zum Bestimmen der relativen Zeitlage elektromagnetischer Pulse bereitgestellt, das die Schritte aufweist:
- Erzeugen einer Folge erster elektromagnetischer Pulse;
- Erzeugen einer Folge zweiter elektromagnetischer Pulse;
- wobei die Dauer der ersten und der zweiten elektromagnetischen Pulse im Femtosekunden-Bereich liegt;
- Überlagern der ersten und der zweiten Pulse in einem sättigbaren Absorber, wobei die Transmission des sättigbaren Absorbers bei Einstrahlung eines schnellen Pulses schnell ansteigt, so dass die Transmission des Absorbers bei Einstrahlen des ersten Pulses eine Anstiegsflanke aufweist, die zumindest näherungsweise dem Verlauf der Anstiegsflanke des ersten Pulses folgt;
- Detektieren der durch den sättigbaren Absorber hindurchgetretenen zweiten Pulse mittels eines Detektors derart, dass mit dem Detektor die zweiten Pulse, nicht jedoch die durch den sättigbaren Absorber hindurchgetretenen ersten Pulse erfasst werden; und
- Bestimmen der Zeitlage der ersten Pulse relativ zu der Zeitlage der zweiten Pulse mit Hilfe eines bei Empfang der durch den sättigbaren Absorber hindurchgetretenen zweiten Pulse erzeugten Signals des Detektors wobei das Bestimmen der relativen Zeitlage der Pulse ein Erfassen einer schnellen Anstiegsflanke des Signals des Detektors umfasst.

Sättigbare Absorber sind Komponenten, die mit zunehmender Leistung der eingestrahlten Pulse transparenter werden und insbesondere rein passiv, d.h. ohne jede Versorgungselektronik, betrieben werden können. Beispielsweise kann ein sättigbarer Absorber auf der Basis von dünnen Halbleiterschichten (z.B. mit einer Dicke im Bereich von 1 µm) ausgebildet sein, womit eine kompakte und kostengünstig realisierbare Komponente zur Verfügung steht. Die Erfindung ist jedoch natürlich nicht auf die Verwendung einer bestimmten Art von sättigbaren Absorbern beschränkt. Insbesondere können jedoch sättigbare Absorber verwendet werden, deren Absorption nicht von der Einstrahlungsrichtung oder von der Polarisation der Pulse abhängig ist.

Bei den elektromagnetischen Pulsen handelt es sich z.B. um (etwa sichtbare oder infrarote) Lichtpulse. Denkbar ist jedoch auch, dass die Erfindung mit anderen elektromagnetischen Pulsen verwendet wird, z.B. mit den eingangs bereits erwähnten Terahertz-Pulsen. Die Dauer der Pulse liegt im Femtosekunden-Bereich.

Das Bestimmen der relativen Zeitlage der Pulse umfasst ein Erfassen einer schnellen Anstiegsflanke des Detektorsignals. Denkbar ist, dass ein Detektor verwendet wird, der nur auf eine Veränderung der Eingangsintensität anspricht, z.B. ein AC- (Wechselstrom-) gekoppelter Detektor.

Er wird darauf hingewiesen, dass das Bestimmen der "relativen Zeitlage" nicht zwingend bedeutet, dass der exakte zeitliche Abstand der ersten zu den zweiten Pulsen bestimmt wird. Vielmehr kann unter dem Bestimmen der relativen Zeitlage auch verstanden werden, dass lediglich eine Information über den zeitlichen Abstand zwischen der ersten und den zweiten Pulsen bestimmt wird; d.h. insbesondere, ob die ersten Pulse den zweiten Pulsen vorauslaufen (oder umgekehrt), d.h. lediglich eine Reihenfolge der ersten Pulse im Vergleich zu den zweiten Pulse bestimmt wird, oder ob die Pulse gleichzeitig (an einem definierten Ort) eintreffen. Denkbar ist auch, dass lediglich eine Klassifizierung des zeitlichen Abstandes zwischen den ersten und den zweiten Pulsen erfolgt, wobei z.B. ermittelt wird, ob der zeitliche Abstand größer oder kleiner als ein Grenzwert ist.

Unter Verwendung der ermittelten relativen Zeitlage erfolgt beispielsweise eine Synchronisierung der ersten und der zweiten Pulse. Die Erfindung muss jedoch nicht unbedingt zur Pulssynchronisierung verwendet werden. Denkbar ist vielmehr auch, dass der zeitliche Abstand der Pulse lediglich gemessen wird, z.B. um Informationen über Eigenschaften (z.B. Rauschen) der Pulse oder eines Pulssystems zu erhalten.

Im Unterschied zu den oben angesprochenen nichtlinearen Kristallen, die den eingestrahlten Pulsen schnell folgen, weisen sättigbare Absorber längere Erholzeiten auf. Aus diesem Grund wäre zu erwarten, dass sie für eine Verwendung zum Bestimmen der relativen Zeitlage zweier (schneller) Pulse (bzw. zweier Pulszüge) und insbesondere zur Synchronisation zweier Pulse nicht in Frage kommen, da mit einer Signalverschmierung zu rechnen ist. Die vorliegenden Erfindung nutzt jedoch die Eigenschaft der sättigbare Absorber aus, dass die beim Einstrahlen der Pulse erfolgende Anhebung von Ladungsträgern ins Leitungsband ein sehr schneller Vorgang ist, so dass die Transmission des sättigbaren Absorbers bei Einstrahlung eines schnellen Pulses ebenfalls schnell ansteigt, d.h. eine steile Anstiegsflanke aufweist, die z.B. zumindest näherungsweise dem Verlauf der Anstiegsflanke des eingestrahlten elektromagnetischen Pulses folgt.

Dadurch, dass nur die zweiten Pulse vom Detektor erfasst werden, wird im Wesentlichen die steile Anstiegsflanke der Absorbertransmission (d.h. der steile Verlauf der Absorptionssättigung) ausgenutzt, so dass die relativ langsame Erholung des Absorbers (d.h. der Rückgang seiner Transmission) nicht stört. Die ersten Pulse (die z.B. die eingangs erwähnten "Pump"-Pulse sein können) haben nur dann einen nennenswerten Einfluss auf die Transmission der zweiten Pulse (die z.B. "Probe"-Pulse sind) durch den sättigbaren Absorber, wenn sie den sättigbaren Absorber zeitgleich mit oder knapp vor den zweiten Pulsen erreichen. In diesem Fall wird die Absorption durch die ersten Pulse verringert (z.B. gesättigt), so dass eine erhöhte Transmission der zweiten Pulse (d.h. eine erhöhte Intensität am Detektor) detektiert werden wird. Wenn die ersten Pulse jedoch erst nach den zweiten Pulsen am sättigbaren Absorber eintreffen, haben diese keinen Einfluss auf die Transmission der zweiten Pulse. In diesem Fall würden umgekehrt die zweiten Pulse einen Einfluss auf die ersten Pulse haben.

Die am Detektor eintreffende Leistung (insbesondere der Leistungsanstieg) der durch den sättigbaren Absorber hindurchgetretenen zweiten Pulse enthält daher Informationen über die Zeitkorrelation zwischen den ersten und zweiten Pulsen; dies insbesondere mit hoher Präzision, da der Anstieg der Absorbertransmission wie erwähnt z.B. zumindest im Wesentlichen der Pulssteilheit folgt. Es ist daher ausreichend, wenn der Detektor eine Geschwindigkeit besitzt, die einer Veränderung der relativen Phase (Zeitlage) zwischen den ersten und den zweiten Pulsen entspricht; er muss also nicht zwingend der Repetitionsfrequenz folgen können, und erst recht nicht der Steilheit der Pulse .

Das zum Bestimmen der relativen Zeitlage der ersten und der zweiten Pulse (insbesondere zum Synchronisieren der Pulse) verwendete Detektorsignal entspricht beispielsweise zumindest näherungsweise einer über mehrere Pulse gemittelten Leistung der durch den sättigbaren Absorber hindurchgetretenen zweiten Pulse. Die integrale Leistung der zweiten Pulse (d.h. jeweils die mittlere Leistung der Pulse) ist insbesondere kleiner als die integrale Leistung der ersten Pulse, um eine Sättigung des Absorbers durch die zweiten Pulse gering zu halten. Beispielsweise ist die mittlere Leistung eines Pulses der ersten Pulse um den Faktor 2, insbesondere um den Faktor 5 oder 10, größer als die integrale Leistung eines Pulses der ersten Pulse. Bei Verwendung eines entsprechend langsamen Detektors kann die detektierte Leistung jedoch zumindest näherungsweise konstant sein, selbst wenn beim Durchstrahlen des sättigbaren Absorbers mit den zweiten Pulsen Selbstsättigung auftritt, da der Detektor nicht die steile Anstiegsflanke der Pulses erfassen wird, sondern nur die integrale Leistung.

Die erfassten (insbesondere schnellen, z.B. innerhalb von Pico- oder Femtosekunden erfolgenden) Intensitätsanstiege entstehen durch die beschriebene schnelle Sättigung des Absorbers, falls die ersten Pulse vor den zweiten Pulsen oder zeitgleich mit den zweiten Pulsen am sättigbaren Absorber eintreffen.

Denkbar ist, dass die ersten und die zweiten Pulse auf einen relativ kleinen Bereich (z.B. einen Fleck mit einem Durchmesser im Bereich von 10 µm) des sättigbaren Absorbers, in dem sie sich überlagern, abgebildet werden; insbesondere wenn kleine Leistungen verwendet werden sollen.

Gemäß einer Ausgestaltung des erfindungsgemäßen Verfahrens erfolgt das erwähnte Synchronisieren der ersten und der zweiten Pulse durch eine (automatische) Regelung, die in Abhängigkeit von dem Detektorsignal die relative Zeitlage der ersten und der zweiten Pulse und/oder die Repetitionsfrequenz der ersten und/oder der zweiten Pulse verändert. Denkbar ist jedoch auch, dass das Detektorsignal benutzt wird, um die Zeitlage und/oder die Repetitionsfrequenz durch manuelles Verstellen einer Einstellung einer Komponente eines Aufbaus (etwa einer Pulsquelle, mit der die Pulse erzeugt werden) zu verändern. Das Verändern der Zeitlage und/oder der Repetitionsfrequenz kann insbesondere dazu dienen, eine zeitliche Drift der ersten und der zweiten Pulse (z.B. der Maxima der Pulse) zu kompensieren. Denkbar ist auch, dass die Amplitude einer z.B. auf die Frequenz der zweiten Pulse aufgeprägten Frequenzmodulation verändert wird.

Beispielsweise wird ein Wert des Detektorsignals zu einem definierten Zeitpunkt nach dem Beginn eines Anstiegs (und z.B. vor dem Erreichen eines Maximums) erfasst und z.B. die Repetitionsfrequenz, die relative Zeitlage der ersten und/oder der zweiten Pulse und/oder eine auf die Frequenz der zweiten Pulse aufgeprägte Frequenzmodulation in Abhängigkeit von diesem Wert verändert (z.B. wenn der Wert einen vorgebbaren Grenzwert überschreitet).

Als Pulsquellen zur Erzeugung der ersten und der zweiten Pulse werden z.B. Pulslaser verwendet, wobei die Repetitionsfrequenz von der Länge des Laserresonators definiert wird. Die Repetitionsfrequenz kann daher durch Verändern der Resonatorlänge eingestellt werden, z.B. durch Spiegel, die mittels Piezoelementen verstellbar sind. Zur Regelung der Piezoelementen kann nun das Detektorsignal verwendet werden, dem entnommen werden kann, ob die Pulse die gleiche Zeitlage haben. Ein anfänglich ermittelter Wert ist hierfür nicht ausreichend, da viele Komponenten (z.B. Wellenleiter, Piezoelemente, Elektronik, etc.) eines Aufbaus, der elektromagnetische Pulse nutzt, eine Drift aufweisen können, z.B. durch Temperaturänderung, wobei bereits kleine Frequenzabweichungen nach wenigen Pulsen zu einem ungewollten und unbekannten Zeitversatz zwischen den ersten und den zweiten Pulsen führen können. Mit Hilfe des Detektorsignals kann der Arbeitspunkt gleicher Zeitlage der ersten und der zweiten Pulse ermittelt und z.B. ein entsprechendes Regelsignal erzeugt werden, wie bereits erwähnt.

Gemäß einem weiteren Ausführungsbeispiel der Erfindung werden die ersten und die zweiten Pulse unter einem Winkel zueinander in den sättigbaren Absorber eingestrahlt, wobei der Detektor auf der Ausbreitungsachse der zweiten Pulse angeordnet ist. Beispielsweise werden hinter dem sättigbaren Absorber durch ein oder mehrere Abbildungselemente (z.B. Linsen oder Spiegel) nur die in Fortsetzung der Ausbreitungsrichtung der zweiten Pulse aus dem sättigbaren Absorber austretenden Pulse (d.h. die durch den sättigbaren Absorber hindurchgetretenen zweiten Pulse) in den Detektor abgebildet. Gemäß einer anderen Realisierung der Erfindung werden Wellenleiter benutzt, um die ersten und/oder die zweiten Pulse an den sättigbaren Absorber heranzuführen; z.B. in Silizium- oder Polymertechnik. Beispielsweise wird der sättigbare Absorber an einer Stirnfläche eines derartigen Wellenleiters oder in einer Sägenut eines Substrats mit dem Wellenleiter angeordnet (insbesondere festgelegt, z.B. geklebt). Denkbar ist, dass Wellenleiter in Form von optischen Fasern verwendet werden, die z.B. in Ätzgräben eines Substrats (Plattform) eingelegt und festgelegt (z.B. verklebt) werden.

In einer anderen Weiterbildung der Erfindung laufen die ersten und die zweiten Pulse gegenläufig durch den sättigbaren Absorber, wobei die durch den sättigbaren Absorber hindurchgetretenen zweiten Pulse über einen Zirkulator auf den Detektor geleitet werden. Beispielsweise ist der sättigbare Absorber zwischen zwei Wellenleitern (etwa in Form optischer Fasern) angeordnet, wobei die dem sättigbaren Absorber zugewandten Enden der Wellenleiter mit abbildenden Elementen (z.B. einer Optik) versehen sein können. Die zweiten Pulse werden dann über den Zirkulator in einen dritten Wellenleiter (z.B. eine weitere optische Faser) und über diesen zum Detektor geleitet.

Möglich ist auch, dass die ersten und die zweiten Pulse unterschiedlich polarisiert sind, wobei mit Hilfe eines Polfilters verhindert wird, dass die ersten Pulse zum Detektor gelangen. Beispielsweise weisen die ersten Pulse eine zu der Polarisation der zweiten Pulse orthogonale Polarisation auf. Hinter dem sättigbaren Absorber werden die ersten Pulse durch ein entsprechend orientiertes Polarisationsfilter abgeblockt, so dass nur die zweiten Pulse den Detektor erreichen. Beispielsweise wird diese Lösung in Wellenleitertechnik (z.B. Fasertechnik) realisiert, wobei die ersten und zweiten Pulse z.B. jeweils über polarisationserhaltende Fasern von den Ausgängen einer Pulsquelle (z.B. in Form eines Femtosekundenlasers) über Polarisations-Splitter/Combiner ("Polarisations-Trenner-Kombinierer") in die TE- bzw. die TM-Achse eines gemeinsamen polarisationserhaltenden Wellenleiters (z.B. optische Faser) eingekoppelt und in derselben Richtung auf den sättigbaren Absorber geleitet werden. An eine Ausgangsfacette des gemeinsamen Wellenleiters kann der sättigbare Absorber (z.B. in Form eines Chips) direkt angeklebt werden. Der Polfilter kann mit dem Detektor verbunden und diese Einheit direkt hinter dem sättigbaren Absorber platziert werden; insbesondere um eine sehr kompakte und kostengünstige Anordnung herzustellen.

Nach einer anderen Ausgestaltung der Erfindung wird aus den ersten oder den zweiten Pulsen eine Folge dritter Pulse erzeugt, die mit einer vorgegebenen Zeitverzögerung gegenüber den ersten oder den zweiten Pulsen in den sättigbaren Absorber eingestrahlt werden. Denkbar ist, dass der zeitliche Abstand der (z.B. aufgrund der zweiten und der dritten Pulse) im Detektorsignal auftretenden Anstiegsflanken zur Zeitkalibrierung in Bezug auf die zweiten Pulse verwendet wird.

Insbesondere wird zum Erzeugen der dritten Pulse eine der beiden Pulsfolgen in zwei Teile (Teilstrahlen) aufgeteilt (z.B. unter Verwendung eines Strahlteilers), wobei einer der Teilstrahlen (d.h. die dritten Pulse) um einen definierten Weg oder um eine definierte Zeit verzögert wird und die beiden Teilstrahlen wieder zusammengeführt werden. Die wieder vereinte Strahlung (Pulsfolge) wird dann in den sättigbaren Absorber eingestrahlt.

Es gibt somit eine zweifache Korrelation zwischen den ersten und zweiten Pulsen, an denen die ersten Pulse einen steilen Anstieg der Absorbersättigung und damit der Transmission der zweiten Pulse erzeugen. Da der zeitliche Abstand der zwischen den dritten Pulsen und den Pulsen, aus denen sie erzeugt wurden (d.h. den ersten bzw. den zweiten Pulsen) und damit der Abstand der beiden Korrelationspunkte (d.h. der Maxima des Detektorsignals bzw. eines definierten Punktes der Anstiegsflanken) bekannt ist, kann nun ein System (insbesondere eine entsprechende Elektronik), in dem das erfindungsgemäße Verfahren eingesetzt wird, bezüglich der Zeitachse skaliert werden. Natürlich können neben den dritten Pulsen weitere zusätzliche Pulsfolgen mit definierter zeitlicher Verzögerung erzeugt werden, um ein Zeitlineal zu erzeugen und z.B. um bei nichtlinearen, z.B. sinusförmigen, Modulationen der Frequenz oder der Phase der ersten und/oder der zweiten Pulse präzisere Zeitskalierungen (Zeitkalibrierungen) zu erhalten. Insbesondere werden die zweiten Pulse jeweils in mehrere Pulse aufgeteilt, wodurch die Leistung der Einzelpulse kleiner und mit der Anzahl der aus den zweiten Pulsen erzeugten weiteren Pulsen auch zunehmend kleiner gegenüber den ersten Pulsen wird. Eine Ausgestaltung dieser Variante beruht auf einer Wellenleiter-Plattform, wobei etwa Splitter, Verzögerungsleitungen und Koppler mit hoher Präzision und robust realisiert werden und z.B. mehrere Stufen mit unterschiedlicher Verzögerung hintereinander geschaltet werden können. Eine andere denkbare Realisierung dieser Variante basiert auf Pulsfolgen (d.h. die Folgen mit den ersten bzw. zweiten Pulsen) mit definierter linearer Polarisation. Hier können doppelbrechende Elemente (d.h. Elemente mit unterschiedlicher Ausbreitungsgeschwindigkeit für TE- und TM-Moden) genutzt werden, z.B. polarisationserhaltende Fasern ("PM-Fasern"). Wird Strahlung in ein solches Element unter einem Winkel voin 45° eingestrahlt, so bilden sich eine schnelle und eine langsame Welle aus. Nach einer geeigneten Strecke ist der gewünschte Zeitversatz erreicht, und die Doppelpulse (d.h. die dritten und die Pulse, aus denen sie erzeugt wurden) können im Weiteren in einem Medium mit gleicher Ausbreitungsgeschwindigkeit geführt werden.

Gemäß einer anderen Ausgestaltung des erfindungsgemäßen Verfahrens werden mit Hilfe eines weiteren Detektors auch die ersten Pulse detektiert, wobei das Bestimmen der relativen Zeitlage der ersten und der zweiten Pulse (z.B. die Synchronisierung der ersten und der zweiten Pulse) in Abhängigkeit von einer Differenz der Signale der beiden Detektoren erfolgt ("Balanced Detection"). Diese Variante kann z.B. für eine Regelung auf einen festen Arbeitspunkt, wie z.B. beim Synchronisieren auf einen Master-Laser, verwendet werden, wobei anhand des Detektorsignals nicht nur der Punkt der optimalen Synchronisation bestimmbar ist, sondern bei einer Abweichung von der erwünschten Synchronität auch die erforderliche Regelrichtung. Denkbar ist, dass der weitere (zweite) Detektor analog zum (ersten) Detektor, mit dem die zweiten Pulse detektiert werden, ausgebildet ist; insbesondere als langsamer Detektor, der über eine Mehrzahl von Pulsen mittelt.

Da bei dieser Erfindungsvariante symmetrisch sowohl die Wirkung der ersten Pulse (zusammen mit dem sättigbaren Absorber) auf die zweiten Pulse als auch die Wirkung der zweiten Pulse auf die ersten Pulse detektiert wird, ist denkbar, dass die ersten und die zweiten Pulse zumindest näherungsweise gleiche Leistungen aufweisen. Es sind insbesondere die folgenden Fälle möglich:
i) Die ersten Pulse erreichen den sättigbaren Absorber vor den zweiten Pulsen, so dass (innerhalb der langsamen Erholzeit des sättigbaren Absorbers) jeweils ausschließlich die ersten Pulse eine Wirkung auf die zweiten Pulse haben; und zwar ist die Transmission des sättigbaren Absorbers für die zweiten Pulse erhöht.
ii) Die zweiten Pulse erreichen den sättigbaren Absorber vor den ersten Pulsen, so dass nur die zweiten Pulse eine Wirkung auf die ersten Pulse haben, und zwar hat der sättigbare Absorber nun für die ersten Pulse eine höhere Transmission.

Die Differenz zwischen der (insbesondere gemittelten) Intensität der am zweiten Detektor eintreffenden, durch den sättigbaren Absorber hindurchgetretenen zweiten Pulse und der Intensität der am ersten Detektor eintreffenden, ebenfalls durch den sättigbaren Absorber hindurchgetretenen ersten Pulse ist im Fall i) positiv und im Fall ii) negativ. Überlagern sich die Pulse exakt zur gleichen Zeit in dem sättigbaren Absorber, ist die Differenz null.

Das Differenzsignal zeigt also sowohl mit hoher Präzision die exakte Zeitgleichheit an, als auch bei Abweichung die benötigte Regelrichtung zum Korrigieren des Zeitlagenunterschieds. Zu bemerken ist, dass hier kein extra Zeitversatz zwischen den Signalen der beiden Detektoren erzeugt werden muss, wie etwa bei der eingangs erwähnten Verwendung eines nichtlinearen Kristalls als Zeitkorrelator. Die unsymmetrische Kennlinie des sättigbaren Absorbers wird hier genutzt zur Anzeige der Regelrichtung.

Es wird darauf hingewiesen, dass natürlich jede der oben beschriebenen Ausführungsvarianten auch mit einem zweiten Detektor zum Detektieren auch der ersten Pulse versehen werden kann, d.h. als Ausführung für die "balanced detection". Werden beispielsweise die ersten und die zweiten Pulse unter einem Winkel in den sättigbaren Absorber eingestrahlt, wird der weitere Detektor in der Achse der in den sättigbaren Absorber eingestrahlten ersten Pulse angeordnet oder es wird zumindest ein abbildendes oder leitendes Element so angeordnet, dass die durch den sättigbaren Absorber hindurchgetretenen ersten Pulse (und nicht die zweiten Pulse) auf den weiteren Detektor geleitet werden. Dies kann selbstverständlich auch mit der beschriebenen (insbesondere planaren) Wellenleiterplattform realisiert werden, mit der z.B. der Justieraufwand reduziert werden kann und eine kompakte und robuste Vorrichtung realisierbar ist.

Bei Anordnungen mit gegenläufiger Einstrahlung in den sättigbaren Absorber muss ein weiterer Zirkulator vorgesehen werden, über den die durch den sättigbaren Absorber hindurchgetretenen ersten Pulse z.B. in eine weitere Glasfaser eingekoppelt und zum weiteren Detektor geleitet werden. Bei der Anordnung unter Nutzung orthogonaler Polarisationen der Pulsfolgen muss der Polarisationsfilter vor dem Detektor durch einen Polarisationssplitter ersetzt und der weitere Detektor am zweiten Splitterausgang angebracht werden.

Die Erfindung betrifft auch eine Bestimmungsvorrichtung zum Durchführen des erfindungsgemäßen Verfahrens gemäß einem der oben beschriebenen Varianten, d.h. zum Bestimmen der relativen Zeitlage von elektromagnetischen Pulsen, mit
- mindestens einer Pulserzeugungseinrichtung zum Erzeugen einer Folge erster elektromagnetischer Pulse und einer Folge zweiter elektromagnetischer Pulse, wobei die Dauer der ersten und der zweiten elektromagnetischen Pulse im Femtosekunden-Bereich liegt;
- einem sättigbaren Absorber, in dem die ersten und die zweiten Pulse überlagerbar sind, wobei die Transmission des sättigbaren Absorbers bei Einstrahlung eines schnellen Pulses schnell ansteigt, so dass die Transmission des Absorbers bei Einstrahlen des ersten Pulses eine Anstiegsflanke aufweist, die zumindest näherungsweise dem Verlauf der Anstiegsflanke des ersten Pulses folgt;
- einem Detektor zum Detektieren von durch den sättigbaren Absorber hindurchgetretenen Pulsen, wobei der Detektor so ausgebildet und angeordnet ist, dass er die durch den sättigbaren Absorber hindurchgetretenen zweiten Pulse, jedoch nicht die durch den sättigbaren Absorber hindurchgetretenen ersten Pulse detektiert; undeiner Erfassungseinheit zum Erfassen einer schnellen Anstiegsflanke des Signals des Detektors.

Die Erfassungseinheit könnte zusätzlich Maxima des Detektorsignals und damit der am Detektor eintreffenden Intensität der zweiten Pulse erfassen, wie oben im Zusammenhang mit dem erfindungsgemäßen Verfahren beschrieben. Darüber hinaus kann die Pulserzeugungseinrichtung mindestens einen Faserlaser zum Erzeugen der ersten und der zweite Pulse aufweisen, der z.B. im Wellenlängebereich von 1030 nm bis 1600 nm emittiert. Beispielsweise ist die erfindungsgemäße Bestimmungsvorrichtung Bestandteil einer Synchronisierungsvorrichtung zum Synchronisieren der ersten und der zweiten Pulse, wie oben beschrieben.

Die Erfindung umfasst auch ein Pump-Probe-System (z.B. ein Terahertz-System) mit einer derartigen Synchronisierungsvorrichtung. Darüber hinaus umfasst die Erfindung auch ein System mit einem Masterlaser und mindestens einem lokalen (z.B. entfernt von dem Masterlaser positionierten) Pulslaser, der mittels der Synchronisierungsvorrichtung mit dem Masterlaser synchronisiert wird. Insbesondere ist die Synchronisierungsvorrichtung nach dem oben beschrieben Prinzip der "balance detection" ausgebildet, d.h. sie weist zwei Detektoren auf.

Die Erfindung wird im Folgenden anhand von Ausführungsbeispielen unter Bezugnahme auf die Figuren näher erläutert. Es zeigen:
- Fig. 1A, 1B: mögliche Anwendungen der Erfindung;
- Fig. 2: eine weitere mögliche Anwendung der Erfindung;
- Fig. 3: schematisch ein erstes Ausführungsbeispiel der erfindungsgemäßen Bestimmungsvorrichtung;
- Fig. 4: eine beispielhafte Transmission eines sättigbaren Absorbers;
- Fig. 5: ein zweites Ausführungsbeispiel der erfindungsgemäßen Bestimmungsvorrichtung;
- Fig. 6: ein drittes Ausführungsbeispiel der erfindungsgemäßen Bestimmungsvorrichtung;
- Fig. 7: ein viertes Ausführungsbeispiel der erfindungsgemäßen Bestimmungsvorrichtung;
- Fig. 8: ein fünftes Ausführungsbeispiel der erfindungsgemäßen Bestimmungsvorrichtung;
- Fig. 9: eine Illustration zu einem sechsten Ausführungsbeispiel der erfindungsgemäßen Bestimmungsvorrichtung;
- Fig. 10A, 10B: ein sechstes Ausführungsbeispiel der erfindungsgemäßen Bestimmungsvorrichtung;
- Fig. 11: ein siebtes Ausführungsbeispiel der erfindungsgemäßen Bestimmungsvorrichtung;
- Fig. 12: eine Illustration zu dem Ausführungsbeispiel der Fig. 11;
- Fig. 13: ein achtes Ausführungsbeispiel der erfindungsgemäßen Bestimmungsvorrichtung; und
- Fig. 14: ein neuntes Ausführungsbeispiel der erfindungsgemäßen Bestimmungsvorrichtung.

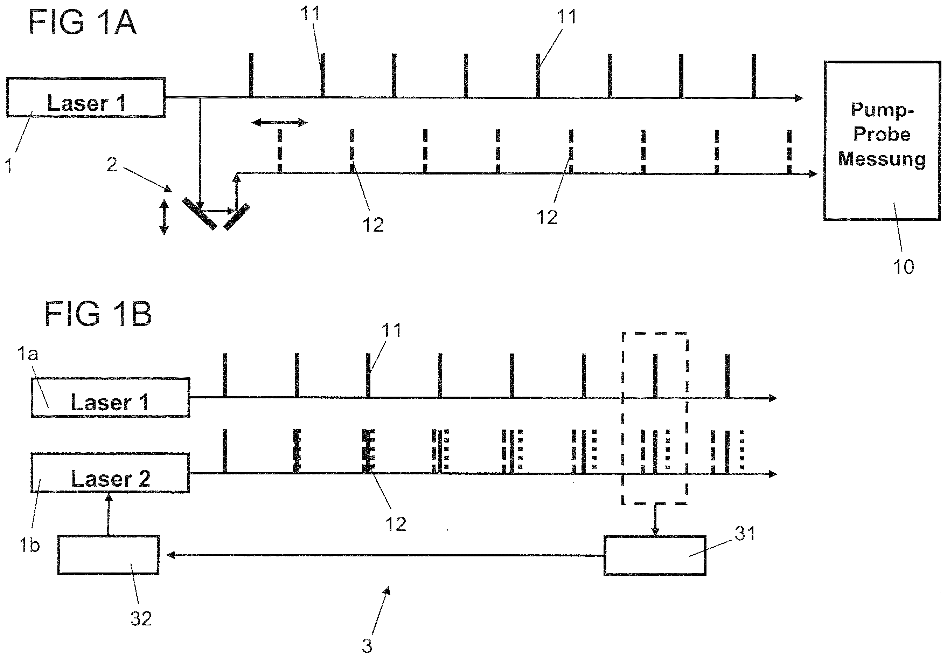

Fig. 1A zeigt in einer schematischen Darstellung ein konventionelles "Pump-Probe"-System (Anrege-Abfrage-System), das einen Laser 1 umfasst, mit dem eine Folge erster optischer Pulse 11 erzeugt wird. Ein Teil der Intensität der Pulse 11 wird aufgeteilt, um eine Folge zweiter Pulse 12 zu generieren, die mit Hilfe einer Verzögerungsstrecke 2 gegenüber den ersten Pulsen 11 zeitlich verzögert werden. Mit den ersten Pulsen 11 (Pump-Pulse) wird z.B. eine Probe bestrahlt, wobei die in der Probe angeregte gepulste Lichtemission mit den zweiten Pulsen 12 (Probe-Pulse) abgetastet wird (Kasten 10 "Pump-Probe-Messung").

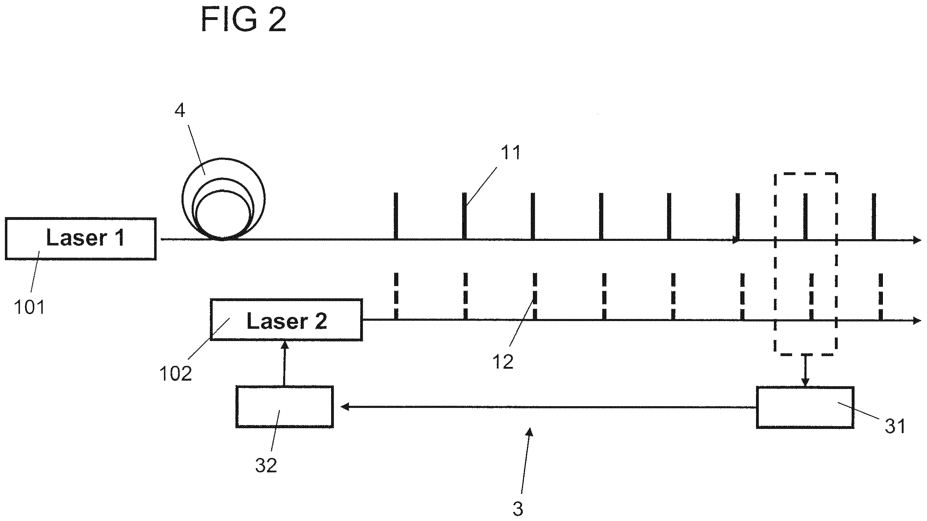

Ein alternatives System zum Durchführen einer Pump-Probe-Messung zeigt Fig. 1B. Hier erfolgt keine mechanische Verzögerung der Pulse, sondern es werden mit zwei Lasern 1a, 1b Folgen erster und zweiter Pulse 11, 12 mit Repetitionsfrequenzen f₁ und f₂ erzeugt. Die Repetitionsfrequenz f₂ der Abtastpulse 12 wird um einen Wert d (insbesondere periodisch, z.B. sprunghaft) verändert, so dass die Abtastpulse 12 (zeitlich) über die ersten Pulse 11 hinweggeführt werden. Der in Fig. 2 gezeigte Aufbau umfasst eine (insbesondere erfindungsgemäße) Synchronisierungsvorrichtung 3, die die ersten und die zweiten Pulse 11, 12 synchronisiert. Die Synchronisierungsvorrichtung 3 umfasst hierfür einen Zeitkorrelator 31, mit dem die relative Zeitlage der ersten und der zweiten Pulse 11, 12 bestimmbar ist und eine Regelung 32, die in Abhängigkeit von Signalen des Zeitkorrelators 31 z.B. die Mittenrepetitionsfrequenz f₁ und/oder die Amplitude d der Repetitionsfrequenzmodulation verändert.

Fig. 2 zeigt ein weiteres System, in dem die vorliegende Erfindung eingesetzt werden kann. Das System weist zum Erzeugen einer Folge erster Pulse 11 einen ersten Pulslaser 101 (Masterlaser) und mindestens einen entfernt zum dem ersten Laser 101 positionierten zweiten Pulslaser 102 (Slavelaser) zum Erzeugen zweiter Pulse 12 auf. Die Repetitionsfrequenzen der beiden Laser 101, 102 sind z.B. identisch.

Die vom ersten Laser 101 erzeugten ersten Pulse 11 werden z.B. über eine Glasfaser 4 zum Standort des zweiten Lasers 102 geleitet. Das System weist wie die Pump-Probe-Anordnung der Fig. 1B eine (insbesondere erfindungsgemäße) Synchronisierungsvorrichtung 3 auf, die über einen Zeitkorrelator 31 und eine Regelung 32 die ersten und die zweiten Pulse 11, 12 synchronisiert. Insbesondere werden über die Regelung 32 die Zeitlage und/oder die Repetitionsfrequenz der zweiten Pulse 12 verändert. Möglich ist auch, dass der Masterlaser und der Slavelaser unterschiedliche Wellenlängen haben, soweit diese im spektralen Absorptionsbereich des Absorbers liegen.

Möglich ist auch dass die ersten und zweiten Pulse aus demselben Laser stammen, durch eine Verzögerungsleitung aber einer der Pulsfolgen um ein Vielfaches des Pulsabstandes verzögert ist. Dann wird die zeitliche Drift von Frequenz und Phase erfasst und diese kann durch Nachregelung minimiert werden. Die Anordnung kann so zur Frequenz- und Phasenstabilisierung eines Lasers genutzt werden.

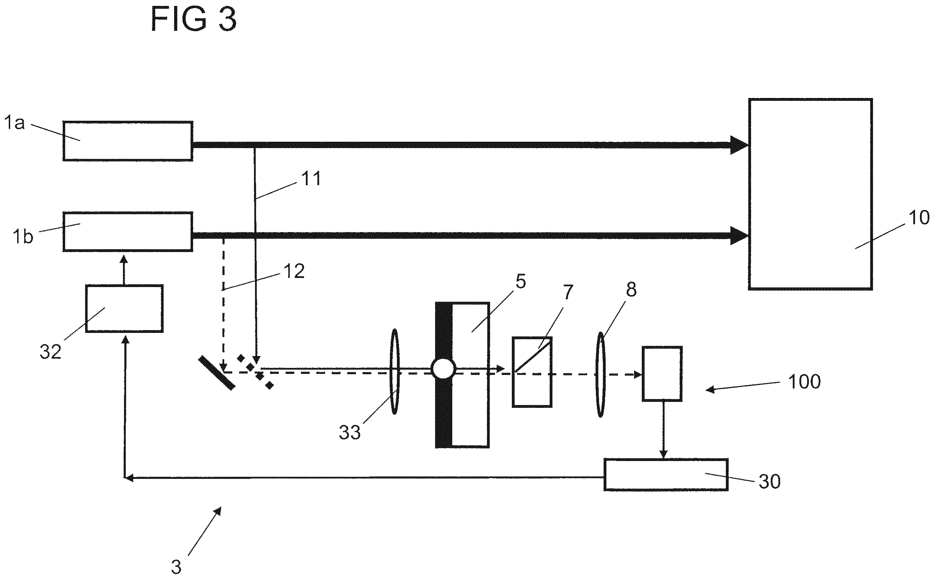

Die Fig. 3 illustriert ein Pump-Probe-System, das eine erfindungsgemäße Bestimmungsvorrichtung 100 als Bestandteil einer Synchronisierungsvorrichtung 3 aufweist. Die Bestimmungsvorrichtung 100 umfasst einen Zeitkorrelator in Form eines sättigbaren Absorbers 5, in dem von einem ersten und einem zweiten Laser 1a, 1b erzeugte erste und zweite Pulse 11, 12 überlagert werden. Hierfür wird ein Teil der von den Lasern ursprünglich erzeugten Pulsintensität mit Hilfe eines entsprechenden optischen Elements (z.B. eines Strahlteilers) ausgekoppelt und über eine Abbildungsoptik 33 in den sättigbaren Absorber 5 eingestrahlt, wobei sich die ersten und die zweiten Pulse 11, 12 in einem Teilbereich des sättigbaren Absorber 5 überlagern.

Das durch den sättigbaren Absorber 5 hindurchgetretene Licht wird mit Hilfe eines Detektors 6 detektiert, wobei jedoch nur entweder die ersten oder die zweiten Pulse 11, 12 (vorliegend die zweiten Pulse 12) zum Detektor 6 gelangen, da das Licht der jeweils anderen Pulse über entsprechend ausgebildete optische Komponenten 7 (Filter, Strahlteiler, etc.) blockiert wird. Das nicht blockierte Licht der zweiten Pulse 12 wird z.B. über eine weitere Abbildungsoptik 8 auf den Detektor 6 gestrahlt.

Der Verlauf der Intensität der durch den sättigbaren Absorber 5 hindurchgetretenen zweiten Pulse 12 enthält Informationen über die relative Phase zwischen den ersten und zweiten Pulsen 11, 12. Eine Erfasseinheit 30 erfasst das bei Eintreffen der zweiten Pulse 12 am Detektor erzeugte Detektorsignal, wobei eine Regelung 32 in Abhängigkeit von einem Signal der Erfasseinheit 30 (und damit auch in Abhängigkeit von dem Detektorsignal) den Laser 1b ansteuert, um z.B. die Phase und/oder die Repetitionsfrequenz der zweiten Pulse 12 zu verändern.

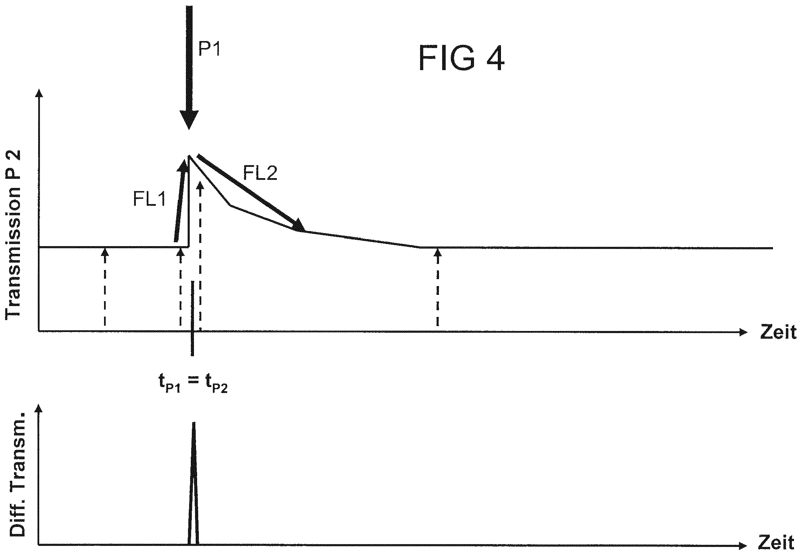

Bei dem Detektor 6 handelt es sich, wie oben bereits angesprochen, insbesondere um einen im Vergleich mit den Pulsen 11, 12 langsamen Detektor, der insofern ein von einem Intensitätsmittelwert abhängiges Signal erzeugt. Das Detektorsignal wird aufgrund der schnellen Sättigung des sättigbaren Absorbers im Wesentlichen eine Veränderung des an ihm einreffenden Signals, d.h. der Transmission des sättigbaren Absorbers, registrieren, wie in Fig. 4 dargestellt (s. die untere Darstellung der Fig. 4, die die mit dem Detektor 6 nachgewiesene differentielle Transmission des Absorbers über der Zeit zeigt).

Die Erfindung nutzt die Eigenschaft der sättigbare Absorber aus, dass die beim Einstrahlen der Pulse erzeugte Anhebung von Ladungsträgern ins Leitungsband ein sehr schneller Vorgang ist, so dass die Transmission des sättigbaren Absorbers bei Einstrahlung eines schnellen Pulses ebenfalls schnell ansteigt, d.h. eine steile Anstiegsflanke aufweist, die z.B. zumindest näherungsweise dem Verlauf der Anstiegsflanke des eingestrahlten elektromagnetischen Pulses folgt.

Wie oben bereits dargelegt, wird dadurch, dass nur die zweiten Pulse 12 vom Detektor 6 erfasst werden, die steile Anstiegsflanke der Absorbertransmission (vgl. Fig. 4, Pfeil FL1 im Bereich von z.B. 50 fs) ausgenutzt, so dass die relativ langsame Erholung des Absorbers (d.h. der Rückgang seiner Transmission) nicht stört (Pfeil FL2, z.B. im Bereich von 5 ps). Die ersten Pulse 11 beeinflussen die Transmission der zweiten Pulse 12 durch den sättigbaren Absorber 5 nur, wenn sie den sättigbaren Absorber 5 zeitgleich mit oder knapp vor den zweiten Pulsen 12 erreichen (Pfeil P1, für "erste Pulse").

In diesem Fall wird die Absorption der zweiten Pulse 12 durch den sättigbaren Absorber 5 durch die Wirkung der ersten Pulse 11 auf den sättigbaren Absorber 5 verringert (z.B. wird der Absorber 5 durch die ersten Pulse 11 gesättigt), so dass eine erhöhte Transmission der zweiten Pulse 12 durch den Absorber 5 erfolgt und infolgedessen ein Anstieg der Intensität am Detektor 6 und entsprechend des Detektorsignals generiert wird. Dies ist in der oberen Zeichnung der Fig. 4 gezeigt, die die Transmission der zweiten Pulse 12 durch den sättigbaren Absorber 5 (d.h. den Verlauf des Detektorsignals) in Abhängigkeit von der Zeit für den Fall zeigt, dass die ersten Pulse 11 zeitgleich mit den zweiten Pulsen 12 oder kurz vor den zweiten Pulsen im Absorber 5 eintreffen. Wenn die ersten Pulse 11 jedoch erst nach den zweiten Pulsen 12 am sättigbaren Absorber 5 eintreffen, haben sie keinen Einfluss auf die Transmission der ersten Pulse 11 durch den Absorber 5.

Ein schneller Anstieg des Detektorsignals (z.B. im Femtosekundenbereich) weist somit auf eine Veränderung der relativen Zeitlage der ersten und der zweiten Pulse 11, 12 hin, so dass aus dem Detektorsignal ein Steuersignal erzeugt werden kann, mit dem eine Steuerung des zweiten Lasers 1b erfolgt. Die Erfasseinheit 30 ist entsprechend insbesondere ausgebildet, einen schnellen Anstieg des Detektorsignals zu erfassen.

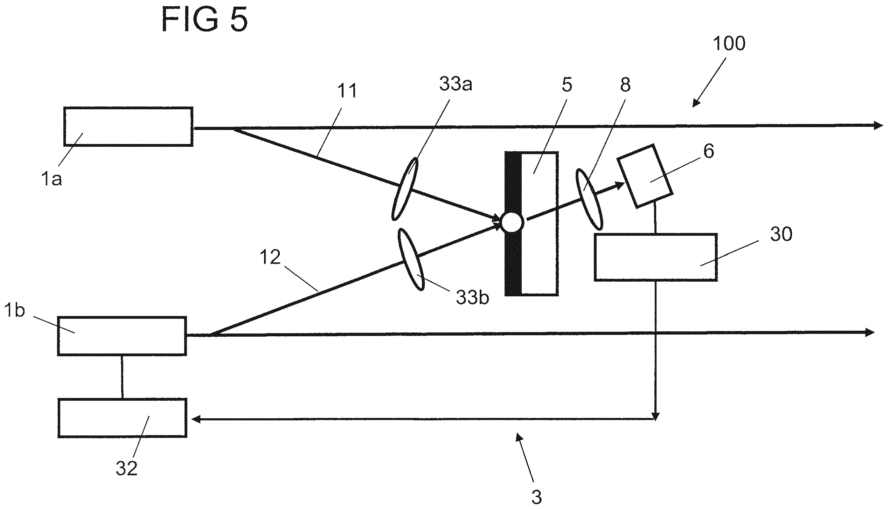

Fig. 5 zeigt eine alternative Ausgestaltung der Bestimmungsvorrichtung 100. Hier werden die ersten und die zweiten Pulse 11, 12 unter einem Winkel in den sättigbaren Absorber 5 eingestrahlt, wobei sie jeweils über eine Abbildungsoptik 33a, 33b auf einen gemeinsamen Bereich des Absorbers 5 abgebildet werden. Der Detektor 6 befindet sich auf der Ausbreitungsachse der zweiten Pulse 12, so dass zwar die durch den sättigbaren Absorber 5 hindurchgetretenen zweiten Pulse 12 (über eine Abbildungsoptik 8) in den Detektor 6 abgebildet werden, die ersten Pulse 11 jedoch am Detektor 6 vorbei laufen.

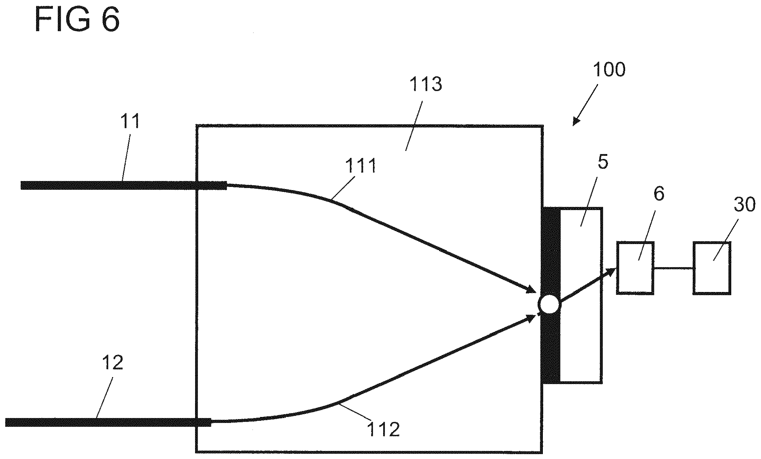

Gemäß dem Ausführungsbeispiel der Fig. 6 werden die ersten und die zweiten Pulse 11, 12 über Wellenleiter in Form zweier Glasfasern 111, 112 die z.B. abschnittsweise in einer Nut in einem Substrat 113 (z.B. einem Silizium-Substrat) verlaufen (Wellenleiter-Plattform), wobei der sättigbare Absorber 5 z.B. unmittelbar an einer Stirnfläche oder in einer Nut des Substrats 113 angeordnet sein kann. Der Detektor 6 kann frei im Raum hinter der Plattform (dem Substrat 113) oder aber auch auf dieser montiert angeordnet werden. Auf diese Weise ist eine kompakte und insbesondere justierfreie sowie robuste Synchronisierungsvorrichtung realisierbar. Denkbar ist natürlich auch, dass anstelle der Glasfasern 111, 112 integrierte Wellenleiter verwendet werden.

Die Glasfasern 111, 112 verlaufen unter einem Winkel zueinander, wobei der Detektor 6 in einer Verlängerung der unteren Glasfaser 112 angeordnet ist, so dass zwar die in der Glasfaser 121 geführten zweiten Pulse 12, nicht jedoch die in der oberen Glasfaser 111 geführten ersten Pulse 11 zum Detektor 6 gelangen.

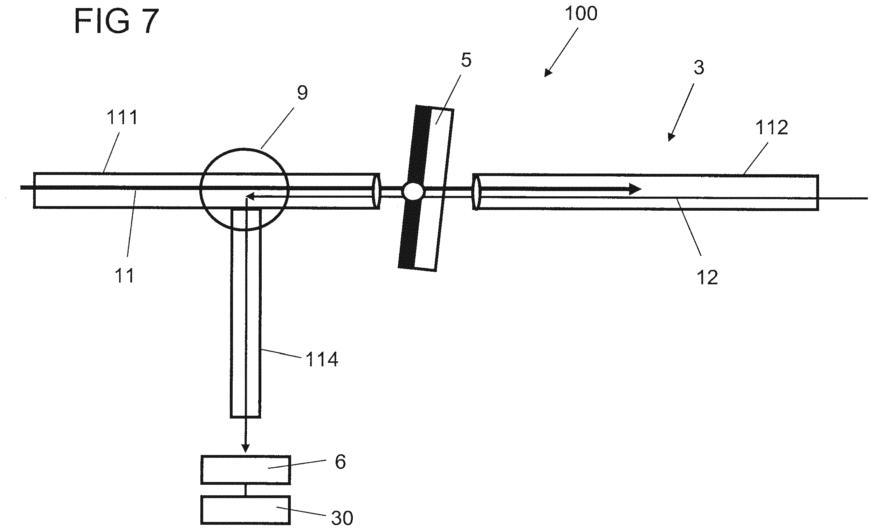

Im Ausführungsbeispiel der Fig. 7 ist der sättigbare Absorber 5 zwischen den Enden zweier Glasfasern 111, 112 angeordnet, mit denen die ersten und die zweiten Pulse 11, 12 gegenläufig zum Absorber 5 geleitet und z.B. über an den Faserenden jeweils ausgebildete Optiken in den sättigbaren Absorber eingestrahlt werden. Nach Durchlaufen des sättigbaren Absorbers 5 werden die ersten und die zweiten Pulse 11, 12 in der jeweils anderen Glasfaser 111, 112 vom Absorber 5 weggeführt. Im Bereich der ersten Glasfaser 111 befindet sich ein Zirkulator 9, über den die durch den sättigbaren Absorber 5 hindurchgetretenen zweiten Pulse 12 in eine dritte Glasfaser 114 eingekoppelt und über diese zum Detektor 6 geleitet werden.

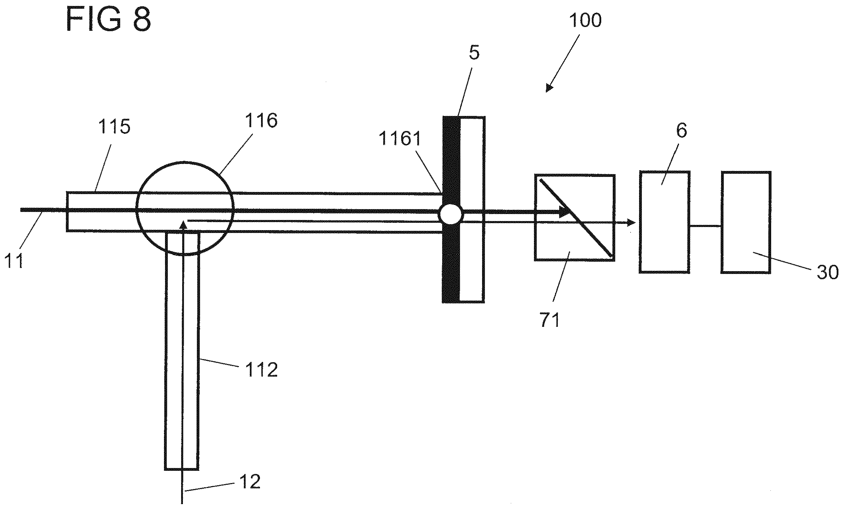

Wie in Fig. 8 dargestellt, ist es auch möglich, dass die ersten und die zweiten Pulse 11, 12 senkrecht zueinander polarisiert sind, wobei mit Hilfe eines hinter dem sättigbaren Absorbers 5 angeordneten Polfilters 71 verhindert wird, dass die ersten Pulse 11 zum Detektor gelangen. Die ersten und zweiten Pulse 11, 12 werden in diesem Ausführungsbeispiel jeweils in die TE- bzw. die TM-Achse einer gemeinsamen polarisationserhaltenden Glasfaser 115 eingekoppelt, wobei die zweiten Pulse 12 über eine (ebenfalls polarisationserhaltende) Glasfaser 112 und einen Polarisations-Combiner 116 in die gemeinsame Glasfaser 115 eingekoppelt werden.

Eine weitere - hier nicht gezeigte - Variante ist möglich, wenn die ersten und zweiten Pulse 11, 12 unterschiedliche Wellenlängen haben. Statt eines Polarisationsfilters - wie in Fig. 8 - wird dann ein Wellenlängenfilter zum Abblocken der ersten Pulse 11 vor dem Detektor angebracht. Mit einem Absorber (z.B. aus InGaAs auf InP) lassen sich so Faserlaser im Bereich von 1600 bis 1000 nm zueinander synchronisieren. Auch die Synchronisation auf kurzwelligere Laser - z.B. Ti:Saphir Laser bei 800 nm - ist möglich. Hier ersetzt das kurzwellig zu 920 nm absorbierende InP-Substrat sogar noch das Wellenlängenfilter. Denkbar ist in dieser Variante, wie oben bereits erwähnt, dass der sättigbare Absorber 5 (z.B. in Form eines Chips) mit einer Ausgangsfacette 1161 der gemeinsamen Glasfaser 115 verbunden ist. Der Polfilter 7 wiederum kann mit dem Detektor 6 verbunden sein.

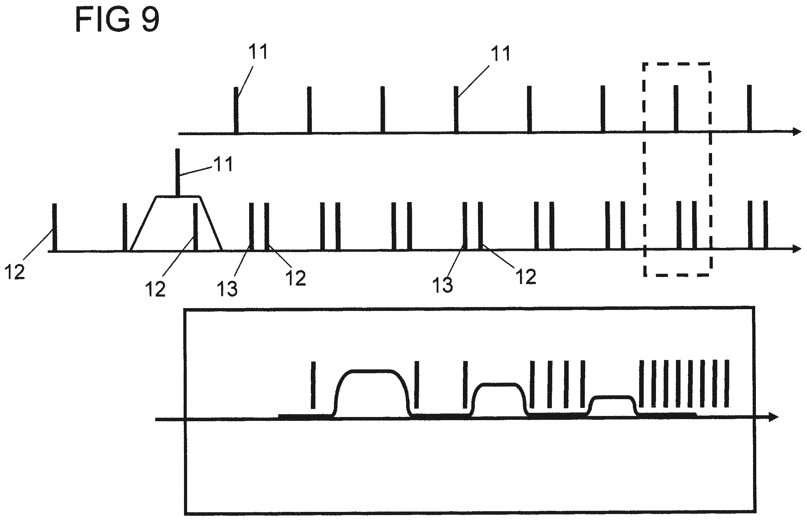

Fig. 9 bezieht sich auf eine Weiterbildung der Erfindung, wonach aus den zweiten Pulsen 12 eine Folge dritter Pulse 13 erzeugt wird, z.B. mit Hilfe eines Strahlteilers. Die dritten Pulse 13 werden mit einer vorgegebenen (also bekannten) Zeitverzögerung gegenüber den zweiten Pulsen 12 in den sättigbaren Absorber 5 eingestrahlt (obere Darstellung der Fig. 9). Da die Verzögerung, mit der die dritten Pulse 13 mit den zweiten Pulsen 12 kombiniert werden, bekannt ist, ist auch der zeitliche Abstand der aufgrund der zweiten und dritten Pulse 12, 13 im Detektorsignal auftretenden Maxima oder Anstiegsflanken bekannt, so dass dieser Abstand zur Zeitkalibrierung in Bezug auf die zweiten Pulse 12 verwendet werden kann, wie oben bereits erläutert.

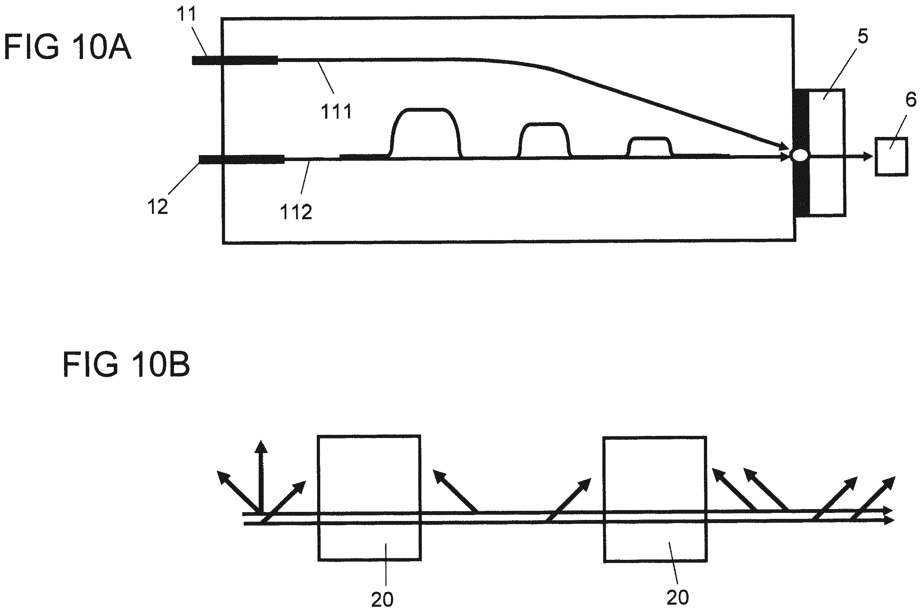

Die Figuren 10A und 10B betreffen mögliche Realisierungen des Prinzips der Fig. 9. In Fig. 10A wird eine Wellenleiterplattform ähnlich zu Fig. 6 genutzt, z.B. um präzise und robust selbst kaskadierte Verzögerungen zu realisieren und diese insbesondere kostengünstig mit der Ausführung von Fig. 6 kombinieren zu können.

Gemäß Fig. 10B werden die zweiten Pulse 12 unter einem Winkel (von z.B. 45°) in eine polarisationserhaltende Faser 112 eingekoppelt, wodurch sich in der Faser eine schnelle und eine langsame Welle ausbildet, so dass sich in der Faser 112 die dritten Pulse 13 herausbilden. Je nach Länge der Faserstrecke können sich weitere zusätzliche Pulse herausbilden, wie in der unteren Darstellung der Fig. 9 angedeutet, wobei die Intensität der ersten Pulse abnimmt.

Anstelle der winkligen Einkopplung in eine polarisationserhaltende Faser können natürlich auch andere Elemente, insbesondere andere doppelbrechende Elemente, verwendet werden, um die dritten Pulse 13 zu erzeugen. Beispielsweise können doppelbrechende Kristalle 20 eingesetzt werden (Fig. 10B). Denkbar ist natürlich auch, dass neben den dritten Pulsen weitere Folgen von Pulsen erzeugt werden, die eine bekannte Zeitverzögerung zu den ersten, zweiten und dritten Pulsen 11, 12, 13 aufweisen.

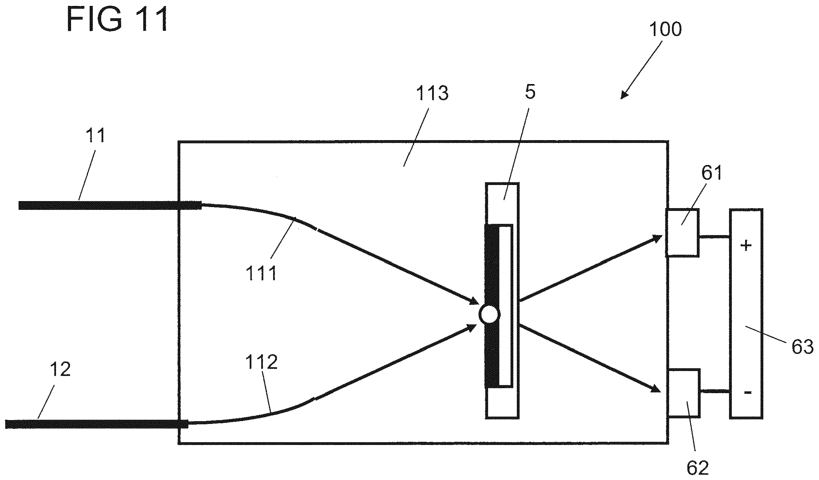

Gemäß dem Ausführungsbeispiel der Fig. 11 ist neben einem ersten Detektor 61 zum Detektieren der zweiten Pulse 12 ein zweiter Detektor 62 zum Detektieren der ersten Pulse 11 vorhanden. Der erste Detektor 61 ist so in einer Verlängerung der Ausbreitungsrichtung der zweiten Pulse 12 angeordnet, dass er nur diese Pulse detektiert und nicht die ersten Pulse 11. Umgekehrt befindet sich der zweite Detektor 62 in einer Verlängerung der Ausbreitungsrichtung der ersten Pulse 11, so dass er nur die ersten Pulse 11 detektieren kann. Die Signale der beiden Detektoren 61, 62 werden zu einem Differenzbilder 63 geleitet, in dem die Differenz der Signale der Detektoren 61, 62 gebildet wird. In Abhängigkeit von der Differenz kann eine Regelung z.B. die Repetitionsfrequenz und/oder die Amplitude der Modulation der Repetitionsfrequenz in Bezug auf die ersten und/oder zweiten Pulse 11, 12 verändern, um die Pulse zu synchronisieren ("balance detection").

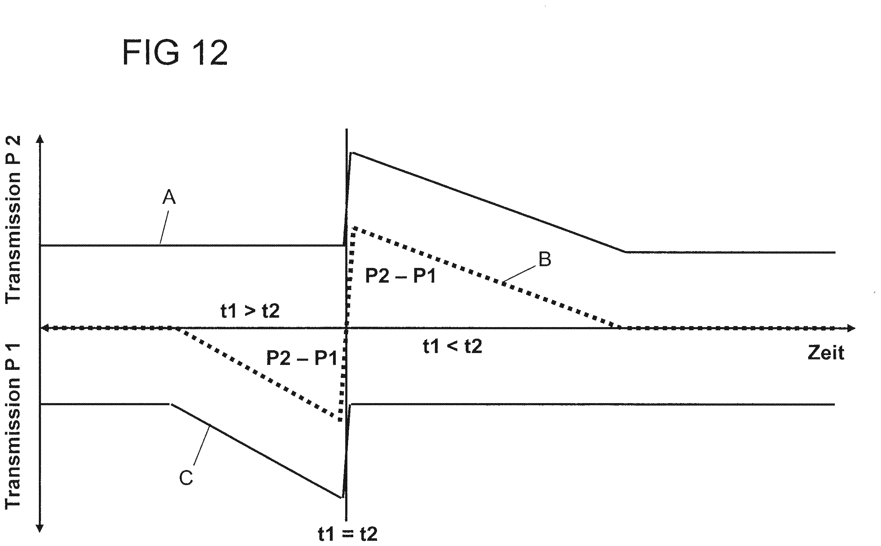

Wie oben bereits erläutert, haben die ersten Pulse 11 eine Wirkung auf die Transmission des Absorbers 5 in Bezug auf die zweiten Pulse 12 ("Transmission P2" in Fig. 12, Kurve A), nur dann, wenn sie den sättigbaren Absorber 5 vor den zweiten Pulsen 12 erreichen. Umgekehrt erhöht sich die Transmission des Absorbers 5 in Bezug auf die ersten Pulse 11, wenn die zweiten Pulse 12 vorher im Absorber 5 eintreffen ("Transmission P1" in Fig. 12, Kurve B). Somit ist im ersten Fall die Differenz zwischen dem Signal des zweiten Detektors 62 (entsprechend der Transmission der ersten Pulse "P1") und dem Signal des ersten Detektors 61 (entsprechend der Transmission der zweiten Pulse "P2") negativ (Kurve C in Fig. 12). Im zweiten Fall ist die Differenz der Detektorsignale positiv. Überlagern sich die Pulse exakt zur gleichen Zeit in dem sättigbaren Absorber, ist die Differenz null.

Dieses Ausführungsbeispiel kann z.B. für eine Regelung auf einen festen Arbeitspunkt, wie z.B. beim Synchronisieren auf einen Master-Laser, verwendet werden, wobei anhand des Detektorsignals nicht nur der Punkt der optimalen Synchronisation bestimmbar ist, sondern auch die erforderliche Regelrichtung, wie oben ebenfalls bereits erläutert.

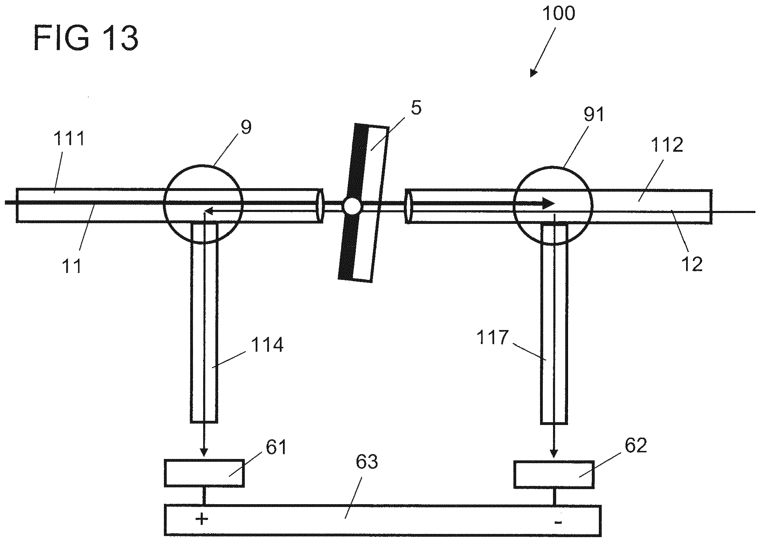

Die beschriebene "balanced detection" kann natürlich mit allen der oben beschriebenen Ausführungsbeispiele verwendet werden. So kann z.B. wie in Fig. 11 gezeigt, eine Wellenleiterplattform analog zu Fig. 6 verwendet werden, wonach die ersten und zweiten Pulse jeweils über eine Glasfaser 111, 112 an den Absorber 5 herangeführt wird. Darüber hinaus kann gemäß Fig. 13 analog zur Fig. 7 der sättigbare Absorber 5 zwischen zwei Glasfasern 111, 112, die die ersten und zweiten Pulse 11, 12 gegenläufig auf den sättigbaren Absorber 5 leiten, angeordnet sein, wobei die zweiten Pulse 12 von einem ersten Detektor 61 empfangen werden. Gemäß Fig. 13 ist ein zweiter Zirkulator 91 vorgesehen, der die durch den Absorber 5 hindurchgetretenen ersten Pulse 11 aus der zweiten Glasfaser 112 in eine vierte Glasfaser 117 einkoppelt, wobei die ersten Pulse 11 in der vierten Glasfaser 117 zu einem weiteren (zweiten) Detektor 62 geleitet werden.

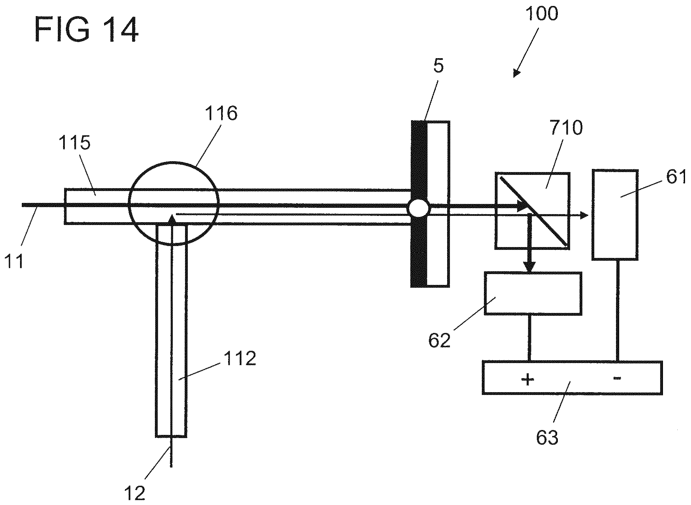

Die Ausführungsvariante der Fig. 14 entspricht der Fig. 8, wobei über einen hinter dem sättigbaren Absorber 5 angeordneten Polarisations-Splitter 710 eine derartige Auftrennung der durch den sättigbaren Absorber 5 hindurchgelaufenen ersten und zweiten Pulse 11, 12 erfolgt, dass die zweiten Pulse 12 auf einen ersten Detektor 61 und die ersten Pulse 11 auf einen zweiten Detektor 62 fallen.

Es wird darauf hingewiesen, dass die im Zusammenhang mit den Ausführungsbeispielen beschriebenen Bestimmungsvorrichtungen nicht zwingend Bestandteil einer Synchronisierungsvorrichtung sein müssen. Denkbar ist vielmehr auch, dass diese Bestimmungsvorrichtungen lediglich als Messeinrichtung zum Bestimmen der relativen Zeitlage der ersten und der zweiten Pulse verwendet werden, ohne dass eine Synchronisierung der Pulse erfolgt.

### Bezugszeichenliste

- 1, 1a, 1b, 101, 102: Laser
- 2: Verzögerungsstrecke
- 3: Synchronisierungsvorrichtung
- 4: Glasfaser
- 5: sättigbarer Absorber
- 6, 61, 62: Detektor
- 7: Polarisationsfilter
- 8: Abbildungsoptik
- 9, 91: Zirkulator
- 10: Pump-Probe-Messung
- 11: erster Puls
- 12: zweiter Puls
- 20: doppelbrechendes Element
- 13: dritter Puls
- 30: Erfasseinheit
- 31: Zeitkorrelator
- 32: Steuerung
- 33, 33a, 33b: Abbildungsoptik
- 63: Differenzbilder
- 71: Polarisationsfilter
- 100: Bestimmungsvorrichtung
- 111, 112, 114, 117: Glasfaser
- 113: Substrat
- 115: polarisationserhaltende Faser
- 116: Polarisations-Combiner
- 710: Polarisations-Splitter
- 1161: Stirnseite

## Patentansprüche

1. Verfahren zum Bestimmen der relativen Zeitlage elektromagnetischer Pulse, mit den Schritten:
- Erzeugen einer Folge erster elektromagnetischer Pulse (11);
- Erzeugen einer Folge zweiter elektromagnetischer Pulse (12);
- wobei die Dauer der ersten und der zweiten elektromagnetischen Pulse (11, 12) im Femtosekunden-Bereich liegt;
- Überlagern zumindest eines Teils der ersten und der zweiten Pulse (11, 12) in einem sättigbaren Absorber (5), wobei die Transmission des sättigbaren Absorbers (5) bei Einstrahlung eines schnellen Pulses schnell ansteigt, so dass die Transmission des Absorbers bei Einstrahlen des ersten Pulses (11) eine Anstiegsflanke aufweist, die zumindest näherungsweise dem Verlauf der Anstiegsflanke des ersten Pulses (11) folgt;
- Detektieren der durch den sättigbaren Absorber (5) hindurchgetretenen zweiten Pulse (12) mittels eines Detektors (6, 61) derart, dass mit dem Detektor die zweiten Pulse (12), nicht jedoch die durch den sättigbaren Absorber (5) hindurchgetretenen ersten Pulse (11) erfasst werden; und
- Bestimmen der Zeitlage der ersten Pulse (11) relativ zu der Zeitlage der zweiten Pulse (12) mit Hilfe eines bei Empfang der durch den sättigbaren Absorber (5) hindurchgetretenen zweiten Pulse (12) erzeugten Signals des Detektors (6, 61), wobei das Bestimmen der relativen Zeitlage der Pulse (11, 12) ein Erfassen einer schnellen Anstiegsflanke des Signals des Detektors (6, 61) umfasst.

2. Verfahren nach Anspruch 1, **dadurch gekennzeichnet, dass** unter Verwendung der bestimmten relativen Zeitlage der Pulse (11, 12) eine Synchronisierung der ersten und der zweiten Pulse (11, 12) erfolgt.

3. Verfahren nach Anspruch 2, **dadurch gekennzeichnet, dass** das Synchronisieren durch eine Regelung (32) erfolgt, die in Abhängigkeit von dem Signal des Detektors (6, 61) die relative Zeitlage der ersten und zweiten Pulsen (11, 12) und/oder die Repetitionsfrequenz (f₁, f₂) der ersten und/oder der zweiten Pulse (11, 12) verändert.

4. Verfahren nach einem der vorhergehenden Ansprüche, **dadurch gekennzeichnet, dass** das zum Bestimmen der relativen Zeitlage der Pulse (11, 12) verwendete Signal des Detektors (6, 61) zumindest näherungsweise einer über mehrere Pulse gemittelten Leistung der durch den sättigbaren Absorber hindurchgetretenen zweiten Pulse (12) entspricht.

5. Verfahren nach einem der vorhergehenden Ansprüche, **dadurch gekennzeichnet, dass** die integrale Leistung eines Pulses der zweiten Pulse (12) kleiner ist als die integrale Leistung eines Pulses der ersten Pulse (11).

6. Verfahren nach einem der Ansprüche 2 bis 5, **dadurch gekennzeichnet, dass** das Synchronisieren der ersten und der zweiten Pulse (11, 12) das Erfassen der Anstiegsflanken der am Detektor (6, 61) eintreffenden Intensität der zweiten Pulse (12) umfasst.

7. Verfahren nach einem der vorhergehenden Ansprüche, **dadurch gekennzeichnet, dass** die ersten und die zweiten Pulse (11, 12) unter einem Winkel zueinander in den sättigbaren Absorber (5) eingestrahlt werden, wobei der Detektor (6, 61) auf der Ausbreitungsachse der zweiten Pulse (12) angeordnet ist.

8. Verfahren nach einem der vorhergehenden Ansprüche, **dadurch gekennzeichnet, dass** die ersten und/oder die zweiten Pulse (11, 12) in einem Wellenleiter (111, 112) an den sättigbaren Absorber (5) herangeführt werden.

9. Verfahren nach einem der vorhergehenden Ansprüche, **dadurch gekennzeichnet, dass** die ersten und die zweiten Pulse (11, 12) gegenläufig durch den sättigbaren Absorber (5) laufen, wobei die durch den sättigbaren Absorber (5) hindurchgetretenen zweiten Pulse (12) über einen Zirkulator (9) auf den Detektor (6, 61) geleitet werden.

10. Verfahren nach einem der vorhergehenden Ansprüche, **dadurch gekennzeichnet, dass** die ersten und die zweiten Pulse (11, 12) unterschiedlich polarisiert sind, wobei mit Hilfe eines Polfilters (71) verhindert wird, dass die ersten Pulse (11) zum Detektor (6, 61) gelangen.

11. Verfahren nach einem der vorhergehenden Ansprüche, **dadurch gekennzeichnet, dass** aus den ersten oder den zweiten Pulsen (11, 12) eine Folge dritter Pulse (13) erzeugt wird, die mit einer vorgegebenen Zeitverzögerung gegenüber den ersten oder den zweiten Pulsen (6, 61) in den sättigbaren Absorber (5) eingestrahlt werden.

12. Verfahren nach Anspruch 11, **dadurch gekennzeichnet, dass** der zeitliche Abstand der aufgrund der zweiten und der dritten Pulse (12, 13) im Signal des Detektor (6, 61) auftretenden Anstiegsflanken oder Maxima zur Zeitkalibrierung in Bezug auf die zweiten Pulse (12) verwendet wird.

13. Verfahren nach einem der vorhergehenden Ansprüche, **dadurch gekennzeichnet, dass** mit Hilfe eines weiteren Detektors (62) die ersten Pulse (11) detektiert werden, wobei das Bestimmen der relativen Zeitlage der ersten und der zweiten Pulse (11, 12) in Abhängigkeit von einer Differenz der Signale der beiden Detektoren (61, 62) erfolgt.

14. Bestimmungsvorrichtung zum Durchführen des Verfahrens gemäß einem der vorhergehenden Ansprüche, mit
- mindestens einer Pulserzeugungseinrichtung (1, 1a, 1b, 101, 102) zum Erzeugen einer Folge erster elektromagnetischer Pulse (11) und einer Folge zweiter elektromagnetischer Pulse (12), wobei die Dauer der ersten und der zweiten elektromagnetischen Pulse (11, 12) im Femtosekunden-Bereich liegt;
- einem sättigbaren Absorber (5), in dem die ersten und die zweiten Pulse (11, 12) überlagert werden, wobei die Transmission des sättigbaren Absorbers (5) bei Einstrahlung eines schnellen Pulses schnell ansteigt, so dass die Transmission des Absorbers bei Einstrahlen des ersten Pulses (11) eine Anstiegsflanke aufweist, die zumindest näherungsweise dem Verlauf der Anstiegsflanke des ersten Pulses (11) folgt; und
- einem Detektor (6, 61) zum Detektieren von durch den sättigbaren Absorber (5) hindurchgetretenen Pulsen, wobei der Detektor (6, 61) so ausgebildet und angeordnet ist, dass er die durch den sättigbaren Absorber (5) hindurchgetretenen zweiten Pulse (12), jedoch nicht die durch den sättigbaren Absorber (5) hindurchgetretenen ersten Pulse (11) detektiert, und einer Erfassungseinheit (30) zum Erfassen einer schnellen Anstiegsflanke des Signals des Detektors (6, 61).

15. Bestimmungsvorrichtung nach Anspruch 14, **dadurch gekennzeichnet, dass** die Pulserzeugungseinrichtung (1, 1a, 1b, 101, 102) mindestens einen Faserlaser zum Erzeugen der ersten und der zweite Pulse (11, 12) aufweist.

## Claims

1. Method for determining the relative temporal position of electromagnetic pulses, having the steps of:
- generating a sequence of first electromagnetic pulses (11);
- generating a sequence of second electromagnetic pulses (12);
- wherein the duration of the first and second electromagnetic pulses (11, 12) is in the femtosecond range;
- superimposing at least some of the first and second pulses (11, 12) in a saturable absorber (5), wherein the transmission of the saturable absorber (5) rises quickly when a fast pulse is radiated in, with the result that, when the first pulse (11) is radiated in, the transmission of the absorber has a rising edge which at least approximately follows the profile of the rising edge of the first pulse (11);
- detecting the second pulses (12) which have passed through the saturable absorber (5) by means of a detector (6, 61) in such a manner that the detector is used to capture the second pulses (12) but not the first pulses (11) which have passed through the saturable absorber (5); and
- determining the temporal position of the first pulses (11) relative to the temporal position of the second pulses (12) with the aid of a signal which is generated by the detector (6, 61) upon receiving the second pulses (12) which have passed through the saturable absorber (5), wherein the determination of the relative temporal position of the pulses (11, 12) comprises capturing a fast rising edge of the signal from the detector (6, 61).

2. Method according to Claim 1, **characterized in that** the first and second pulses (11, 12) are synchronized using the determined relative temporal position of the pulses (11, 12).

3. Method according to Claim 2, **characterized in that** the synchronization is carried out by means of a control operation (32) which changes the relative temporal position of the first and second pulses (11, 12) and/or the repetition frequency (f₁, f₂) of the first and/or second pulses (11, 12) on the basis of the signal from the detector (6, 61).

4. Method according to one of the preceding claims, **characterized in that** that signal from the detector (6, 61) which is used to determine the relative temporal position of the pulses (11, 12) corresponds at least approximately to a power of the second pulses (12) which have passed through the saturable absorber, which power is averaged over a plurality of pulses.

5. Method according to one of the preceding claims, **characterized in that** the integral power of a pulse of the second pulses (12) is less than the integral power of a pulse of the first pulses (11).

6. Method according to one of Claims 2 to 5, **characterized in that** the synchronization of the first and second pulses (11, 12) comprises capturing the rising edges of the intensity of the second pulses (12) that arrives at the detector (6, 61).

7. Method according to one of the preceding claims, **characterized in that** the first and second pulses (11, 12) are radiated into the saturable absorber (5) at an angle with respect to one another, wherein the detector (6, 61) is arranged on the propagation axis of the second pulses (12).

8. Method according to one of the preceding claims, **characterized in that** the first and/or second pulses (11, 12) are guided to the saturable absorber (5) in a waveguide (111, 112).

9. Method according to one of the preceding claims, **characterized in that** the first and second pulses (11, 12) run through the saturable absorber (5) in opposite directions, wherein the second pulses (12) which have passed through the saturable absorber (5) are passed to the detector (6, 61) via a circulator (9).

10. Method according to one of the preceding claims, **characterized in that** the first and second pulses (11, 12) polarized differently, wherein a polarizing filter (71) is used to prevent the first pulses (11) from reaching the detector (6, 61).

11. Method according to one of the preceding claims, **characterized in that** a sequence of third pulses (13) is generated from the first or second pulses (11, 12), which third pulses are radiated into the saturable absorber (5) with a predefined time delay with respect to the first or second pulses (6, 61).

12. Method according to Claim 11, **characterized in that** the interval of time between the rising edges or maxima occurring on account of the second and third pulses (12, 13) in the signal from the detector (6, 61) is used for time calibration with respect to the second pulses (12).

13. Method according to one of the preceding claims, **characterized in that** the first pulses (11) are detected with the aid of a further detector (62), wherein the relative temporal position of the first and second pulses (11, 12) is determined on the basis of a difference between the signals from the two detectors (61, 62).

14. Determination apparatus for carrying out the method according to one of the preceding claims, having
- at least one pulse generation device (1, 1a, 1b, 101, 102) for generating a sequence of first electromagnetic pulses (11) and a sequence of second electromagnetic pulses (12), wherein the duration of the first and second electromagnetic pulses (11, 12) is in the femtosecond range;
- a saturable absorber (5) in which the first and second pulses (11, 12) are superimposed, wherein the transmission of the saturable absorber (5) rises quickly when a fast pulse is radiated in, with the result that, when the first pulse (11) is radiated in, the transmission of the absorber has a rising edge which at least approximately follows the profile of the rising edge of the first pulse (11); and
- a detector (6, 61) for detecting pulses which have passed through the saturable absorber (5), wherein the detector (6, 61) is designed and arranged in such a manner that it detects the second pulses (12) which have passed through the saturable absorber (5) but not the first pulses (11) which have passed through the saturable absorber (5), and
- a capture unit (30) for capturing a fast rising edge of the signal from the detector (6, 61).

15. Determination apparatus according to Claim 14, **characterized in that** the pulse generation device (1, 1a, 1b, 101, 102) has at least one fibre laser for generating the first and second pulses (11, 12).

## Revendications

1. Procédé de détermination de la position temporelle relative d'impulsions électromagnétiques, comprenant les étapes consistant à :
- générer une suite de premières impulsions électromagnétiques (11) ;
- générer une suite de deuxièmes impulsions électromagnétiques (12) ;
- dans lequel la durée des premières et des deuxièmes impulsions électromagnétiques (11, 12) se situe dans la gamme des femtosecondes ;
- superposer au moins une partie des premières et des deuxièmes impulsions (11, 12) dans un absorbeur saturable (5), dans lequel la transmission de l'absorbeur saturable (5) augmente rapidement lors de l'injection d'une impulsion rapide, de sorte que la transmission de l'absorbeur lors de l'injection de la première impulsion (11) présente un front montant qui suit au moins approximativement la courbe du front montant de la première impulsion (11) ;
- détecter les deuxièmes impulsions (12) ayant traversé l'absorbeur saturable (5) au moyen d'un détecteur (6, 61) de manière à détecter au moyen du détecteur les deuxièmes impulsions (12) mais pas les premières impulsions (11) ayant traversé l'absorbeur saturable (5) ; et
- déterminer la position temporelle des premières impulsions (11) par rapport à la position temporelle des deuxièmes impulsions (12) à l'aide d'un signal généré par le détecteur (6, 61) lors de la réception des deuxièmes impulsions (12) ayant traversé (5) le dispositif d'absorption saturable, dans lequel la détermination de la position temporelle relative des impulsions (11, 12) consiste à détecter un front montant rapide du signal du détecteur (6, 61).

2. Procédé selon la revendication 1, **caractérisé en ce que** les premières et les deuxièmes impulsions (11, 12) sont synchronisées par utilisation de la position temporelle relative déterminée des impulsions (11, 12).

3. Procédé selon la revendication 2, **caractérisé en ce que** la synchronisation est effectuée par un contrôleur (32) qui modifie la position temporelle relative des premières et des deuxièmes impulsions (11, 12) et/ou la fréquence de répétition (f₁, f₂) des premières et/ou des deuxièmes impulsions (11, 12) en fonction du signal du détecteur (6, 61).

4. Procédé selon l'une des revendications précédentes, **caractérisé en ce que** le signal du détecteur (6, 61) utilisé pour déterminer la position temporelle relative des impulsions (11, 12) correspond au moins approximativement à une puissance, moyennée sur une pluralité d'impulsions, des deuxièmes impulsions (12) ayant traversé l'absorbeur saturable.

5. Procédé selon l'une des revendications précédentes, **caractérisé en ce que** la puissance intégrale d'une impulsion des deuxièmes impulsions (12) est inférieure à la puissance intégrale d'une impulsion des premières impulsions (11).

6. Procédé selon l'une des revendications 2 à 5, **caractérisé en ce que** la synchronisation des premières et des deuxièmes impulsions (11, 12) consiste à détecter les fronts montants de l'intensité des deuxièmes impulsions (12) atteignant le détecteur (6, 61).

7. Procédé selon l'une des revendications précédentes, **caractérisé en ce que** les premières et les deuxièmes impulsions (11, 12) sont injectées dans l'absorbeur saturable (5) sous un certain angle les unes par rapport aux autres, dans lequel le détecteur (6, 61) est disposé sur l'axe de propagation des deuxièmes impulsions (12).

8. Procédé selon l'une des revendications précédentes, **caractérisé en ce que** les premières et/ou les deuxièmes impulsions (11, 12) sont acheminées vers l'absorbeur saturable (5) dans un guide d'ondes (111, 112).

9. Procédé selon l'une des revendications précédentes, **caractérisé en ce que** les premières et les deuxièmes impulsions (11, 12) passent à travers l'absorbeur saturable (5) dans des directions opposées, dans lequel les deuxièmes impulsions (12) ayant traversé l'absorbeur saturable (5) sont guidées vers le détecteur (6, 61) par l'intermédiaire d'un circulateur (9).

10. Procédé selon l'une des revendications précédentes, **caractérisé en ce que** les premières et les deuxièmes impulsions (11, 12) sont polarisées différemment, dans lequel les premières impulsions (11) sont empêchées d'atteindre le détecteur (6, 61) à l'aide d'un filtre polarisant (71).

11. Procédé selon l'une des revendications précédentes, **caractérisé en ce qu'**à partir des premières ou des deuxièmes impulsions (11, 12), on génère une suite de troisièmes impulsions (13) qui sont injectées dans l'absorbeur saturable (5) avec un retard prédéterminé par rapport aux premières ou aux deuxièmes impulsions (6, 61).

12. Procédé selon la revendication 11, **caractérisé en ce que** l'intervalle de temps entre les fronts montants ou les maxima apparaissant en raison des deuxièmes et des troisièmes impulsions (12, 13) dans le signal du détecteur (6, 61) est utilisé pour effectuer un étalonnage temporel par rapport aux deuxièmes impulsions (12).

13. Procédé selon l'une des revendications précédentes, **caractérisé en ce que** les premières impulsions (11) sont détectées à l'aide d'un autre détecteur (62), dans lequel la détermination de la position temporelle relative des premières et des deuxièmes impulsions (11, 12) est effectuée en fonction d'une différence entre les signaux des deux détecteurs (61, 62).

14. Dispositif de détermination servant à la mise en oeuvre du procédé selon l'une des revendications précédentes, comprenant
- au moins un dispositif générateur d'impulsions (1, 1a, 1b, 101, 102) destiné à générer une suite de premières impulsions électromagnétiques (11) et une suite de deuxièmes impulsions électromagnétiques (12), dans lequel la durée des premières et des deuxièmes impulsions électromagnétiques (11, 12) se situe dans la gamme des femtosecondes ;
- un absorbeur saturable (5) dans lequel les premières et les deuxièmes impulsions (11, 12) sont superposées, dans lequel la transmission de l'absorbeur saturable (5) augmente rapidement lors de l'injection d'une impulsion rapide, de sorte que la transmission de l'absorbeur lors de l'injection de la première impulsion (11) présente un front montant qui suit au moins approximativement la courbe du front montant de la première impulsion (11) ; et
- un détecteur (6, 61) destiné à détecter des impulsions ayant traversé l'absorbeur saturable (5), dans lequel le détecteur (6, 61) est conçu et agencé pour détecter les deuxièmes impulsions (12) ayant traversé l'absorbeur saturable (5) mais pas les premières impulsions (11) ayant traversé l'absorbeur saturable (5), et
une unité de détection (30) destinée à détecter un front montant rapide du signal du détecteur (6, 61).

15. Dispositif de détermination selon la revendication 14, **caractérisé en ce que** le dispositif générateur d'impulsions (1, 1a, 1b, 101, 102) comporte au moins un laser à fibre destiné à générer les premières et les deuxièmes impulsions (11, 12).
